**Europäisches Patentamt**

(19) **European Patent Office**

**Office européen des brevets**

(11) Veröffentlichungsnummer: **0 089 619**
**B1**

(12) **EUROPÄISCHE PATENTSCHRIFT**

(45) Veröffentlichungstag der Patentschrift:
04.06.86

(51) Int. Cl.⁴: **H 01 M 2/06**

(21) Anmeldenummer: **83102617.4**

(22) Anmeldetag: **16.03.83**

(54) **Gas- und flüssigkeitsdichte Polabdichtung.**

(30) Priorität: **19.03.82 DE 3210159**

(43) Veröffentlichungstag der Anmeldung:
**28.09.83 Patentblatt 83/39**

(45) Bekanntmachung des Hinweises auf die Patenterteilung:
**04.06.86 Patentblatt 86/23**

(84) Benannte Vertragsstaaten:
**AT FR GB IT SE**

(56) Entgegenhaltungen:
**EP - A - 0 025 661**
**GB - A - 1 569 410**
**US - A - 1 642 224**
**US - A - 2 781 414**
**US - A - 3 228 804**

(73) Patentinhaber: **ACCUMULATORENFABRIK SONNENSCHEIN GMBH, Thiergarten Postfach 1180, D-6470 Büdingen 1 Oberhessen (DE)**

(72) Erfinder: **Kugler, Wolfgang, Hanauerstrasse 23, D-6474 Ortenberg 9 (DE)**
Erfinder: **Többen, Peter, Dipl.-Ing., Schlesische Strasse 8, D-6470 Büdingen 1 (DE)**

(74) Vertreter: **Baumann, Eduard, Dipl.-Phys., Postfach 1201 Sattlerstrasse 1, D-8011 Höhenkirchen/München (DE)**

## Beschreibung

Die Erfindung bezieht sich auf eine gas- und flüssigkeitsdichte Polabdichtung für Akkumulatoren.

Die DE-A-30 35 842 beschreibt eine gas- und flüssigkeitsdichte Polabdichtung für Akkumulatoren, deren Gehäuse aus Kunststoff, vornehmlich aus Polyäthylen oder Polypropylen besteht, insbesondere für Bleiakkumulatoren, mit

a) einer topfförmigen Ausbildung des Kunststoffdeckels im Bereich der Durchtrittsöffnung für den Pol,

b) einer unteren Schicht aus Hartverguss, vorzugsweise aus säurefestem Zweikomponenten-Harz am Topfboden,

c) einer daran angrenzenden mittleren Schicht aus thermoplastischem, dauerelastischem, säurebeständigem Kunststoff, vorzugsweise aus Schmelzkleber wie z.B. Äthylenacrylpolymere bzw. andere Produkte dieser Gattung oder aus Bitumen, Wachs, Harz, Fett, und

d) einer daran angrenzenden oberen Schicht aus Hartverguss, vorzugsweise aus säurefestem Zweikomponenten-Harz, oberhalb der mittleren Schicht.

Ziel einer derartigen Polabdichtung ist es, eine dauerhafte gas- und flüssigkeitsdichte Polabdichtung unter allen wechselnden Betriebsbedingungen zu schaffen.

Es zeigte sich, dass bei der in der DE-A-30 35 842 beschriebenen Polabdichtung bei höheren Betriebstemperaturen die weiche Mittelschicht der Dreifach-Polabdichtung an der Innenseite der topfförmigen Ausbildung an die Oberfläche treten kann. Dies kann unter Umständen die Gefahr einer Undichtigkeit mit sich bringen. Insbesondere stellt das Austreten dieser Dichtungsmasse auch einen Schönheitsfehler dar, der zu Reklamationen der Kunden führte.

Weitere Polabdichtungen sind aus den Deutschen Gebrauchsmustern 7 824 751, 7 538 815, 7 525 500 und 1 926 763 bekannt. Beim Gegenstand des DE-GM 7 824 751 wird der Pol durch eine Polwanne geführt, die mit Korrosionsschutzmittel ausgegossen ist. Eine Stützschulter des Poles unterhalb des Zellendeckels verhindert eine axiale Ausdehnungsmöglichkeit des Polschaftes. Das DE-GM 7 538 815 beschreibt einen durch Kunststoffmantel abgeschirmten Polschaft, der durch eine Polwanne geführt und dort mittels eingeklebtem Profilring abgedichtet wird. Eine Vergussmasse zwischen Pol und Profilring bildet eine zusätzliche Abdichtung nach aussen. Beim Gegenstand des DE-GM 7 525 500 ist der Polschaft durch einen aufgeklebten Kunststoffmantel gegen Korrosion geschützt, er wird durch eine Polwanne geführt und ist dort durch einen Dichtring abgedichtet. Eine zusätzliche Abdichtung und Verankerung des Poles ist am Zellendeckel vorgesehen. Beim DE-GM 1 926 763 ist eine Poldurchführung durch eine Polwanne vorgesehen, die durch Dichtlippen gegen den Pol abdichtet und mit aushärtender Vergussmasse ausgegossen wird.

In der US-PS 4 245 014 wird eine abdichtende Poldurchführung mit eingequetschtem O-Ring beschrieben. Die Festlegung der Abdichtung wird durch Schraubverbindung gewährleistet, die zusätzlich mit Bitumen abgedichtet ist und dann gänzlich mit Epoxydharz vergossen wird.

Der Erfindung liegt daher die Aufgabe zugrunde, die Polabdichtung bei höheren Betriebstemperaturen zu verbessern und besonders das Austreten der weichen Mittelschicht zu verhindern.

Die Aufgabe wird erfindungsgemäss durch die Merkmale des Anspruches 1 gelöst.

Weitere Ausbildungen der Erfindung sind in den Unteransprüchen dargestellt.

Die Erfindungsidee liegt darin, einen nach aussen hin abgedichteten leeren Raum innerhalb der Polabdichtung zu schaffen, der mit der weichen mittleren Schicht aus thermoplastischem, dauerelastischem und säurebeständigem Kunststoff in Berührung steht. Gerät nun diese weiche mittlere Schicht bei höheren Betriebstemperaturen unter Druck, so kann das sich ausdehnende Material in diesen leeren Raum treten, ohne dass es Kriechwege suchen muss, insbesondere an der Innenseite der topfförmigen Ausbildung. Der auftretende Druck kann auf diese Weise abgeleitet werden, ohne dass eine Druckbelastung die Abdichtungseigenschaften der Polabdichtung beeinträchtigt, und ohne dass optisch störende Anteile der weichen mittleren Schicht an die Oberfläche gelangen.

Bezüglich der Unteransprüche 2–6 darf auf die entsprechenden Ausführungen der DE-A-30 35 842 verwiesen werden.

Gemäss Anspruch 7 wird oberhalb der weichen mittleren Schicht dadurch ein ringförmiger freier Raum geschaffen, dass man ein Zylinderteil auf die Mittelschicht aufsetzt, die in diese noch geringfügig eintaucht und einen Aussendurchmesser kleiner dem Innendurchmesser der topfförmigen Ausbildung einsetzt. Der Zwischenraum zwischen Zylinderteil und topfförmiger Ausbildung des Akkumulatordeckels ist nach aussen hin abgedichtet, vorzugsweise durch einen Dichtungsring wie einen O-Ring aus Gummi oder dauerelastischem Kunststoff. Der Innenraum des Zylinders wird schliesslich mit der oberen Schicht aus Hartverguss ausgegossen.

Die Abdichtung der weichen Schicht nach unten kann wie beim Gegenstand der De-A-30 35 842 durch eine am Boden der topfförmigen Ausbildung des Akkumulatordeckels aufliegenden und gegen den Pol 1 drückenden Abdichtung aus Gummi oder dauerelastischem Kunststoff erfolgen, der in eine untere Schicht aus Hartverguss eingegossen ist, wobei sich an diese untere Schicht die mittlere Schicht aus thermoplastischem und dauerelastischem Kunststoff anschliesst. Es zeigte sich im übrigen, dass die untere Schicht Hartverguss so dünn sein kann, dass sie gerade noch sicher die untere Abdichtung gegen den Pol abdeckt.

Bei vielen Einsatzbedingungen kann sogar diese untere Schicht aus Hartverguss ganz entfallen. Dies gilt insbesondere dann, wenn man statt der einfachen, gegen den Pol drückenden Abdichtung am Topfboden eine aufwendigere Abdichtung nimmt, die eine Ringnut aufweist, in welche die kreisförmige Innenkante des Topfbodens eingreifen kann. Zweckmässigerweise nimmt diese Abdichtung in Richtung zum Akkumulatorinneren und zum Pol hin ab. Auf diese Weise ist ein einfaches und dennoch strammes Aufschieben einer derartigen Abdichtung auf den Pol möglich, bis die Rille der Abdichtung mit der kreisförmigen Innenkante des Topfbodens einrastet.

Der freie Raum, der mit der mittleren Schicht in Verbindung steht, kann auch als poröser freier Raum ausgebildet werden, vorzugsweise in Form eines offenporigen und elastischen Vlieses. Die bei Temperaturanstieg sich ausdehnende mittlere Schicht kann dann in den Luftraum der porösen freien Kammer eindringen und somit die gleichen Wirkungen wie ein lediglich mit Luft gefüllter freier Raum erzielen. Dieses Ausführungsbeispiel hat den Vorteil einer besonders einfachen Herstellungsform, wobei die untere und die obere Schicht im wesentlichen unverändert bleiben können. Es kann jedoch das Ringteil 11 entfallen. Um das Eindringen des zunächst flüssigen Hartvergusses bei der Herstellung zu vermeiden, sollte die dem Hartverguss zugeneigte Seite flüssigkeitsdicht ausgebildet sein.

Ausführungsbeispiele der Erfindung sind in der Zeichnung dargestellt. Es zeigt:

Figur 1 den Schnitt durch ein erstes Ausführungsbeispiel mit Dreifach-Polverguss,

Figur 2 den Schnitt durch ein zweites Ausführungsbeispiel mit Zweifach-Polverguss und spezieller unterer Abdichtung,

Figur 3 ein anderes Ausführungsbeispiel der Erfindung, teilweise im Schnitt.

Bei beiden Ausführungsbeispielen sind identische Teile mit identischen Bezugzeichen versehen. So wird der Pol mit 1, der Akkumulatordeckel mit 2 und die Poldurchführung mit 3 bezeichnet. Die topfförmige Ausbildung des Akkumulatordeckels 2 hat die Bezugsziffer 10, der Boden des so entstandenen Topfes die Bezugsziffer 4. Mit 7 ist die obere Schicht aus Hartverguss bezeichnet. Sie ragt mittels einer ringförmigen Rippe 8 in eine entsprechende Ringnut des Poles 1 hinein, um eine feste Verbindung zwischen diesen beiden Teilen herzustellen und ein Verschieben entlang der Poloberfläche zu verhindern. Das Zylinderteil wird allgemein mit 11 bezeichnet, das untere Teilstück des Zylinderteiles mit 12, der obere, radial nach aussen ragende und auf einer ringförmigen Aussparung des Akkumulatordeckels 2 aufliegende obere Teil des Zylinderteiles 11 wird mit 15 bezeichnet. Unterhalb dieses Oberteiles 15 ist eine ringförmige Abdichtung in Form eines O-Ringes 16 dargestellt. Zwischen der Innenseite 13 der topfförmigen Ausbildung 10 und dem unteren Teil 12 des Zylinderteiles 11 sowie oberhalb der mittleren weichen Schicht 6 beziehungsweise 17 und unterhalb des O-Ringes 16 entsteht ein ringförmiger freier Raum 14.

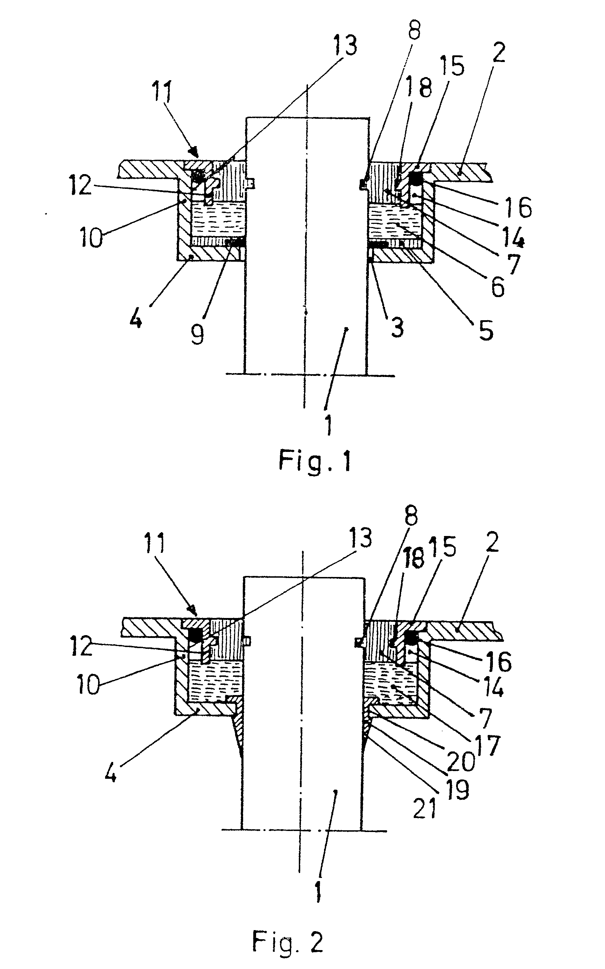

Unterschiede bestehen zwischen Figur 1 und Figur 2 lediglich im untersten Bereich, der an den Boden 4 der topfförmigen Ausbildung 10 des Akkumulatordeckels 2 anschliesst. So ist in Figur 1 wie bereits bei der DE-A-30 35 842 eine Abdichtung 9 in Form einer flachen Abdichtung vorgesehen, deren Innenteil gegen den Pol 1 abdichtet und deren Unterseite dicht am Boden 4 aufliegt. Diese Abdichtung 9 ist durch einen unteren Hartverguss 5 vergossen, an dessen Oberseite die weiche mittlere Schicht 6 angrenzt.

Im Unterschied dazu ist beim Ausführungsbeispiel gemäss Figur 2 keine untere Schicht aus Hartverguss vorgesehen. Statt der Abdichtung 9 gemäss Figur 1 ist hier eine etwas aufwendigere Abdichtung 19 mit einer Ringnut 20 vorgesehen, in welche die innere zylinderförmige Kante (nicht bezeichnet) des Bodens 4 der topfförmigen Ausbildung 10 eingreift. Nach unten beziehungsweise in Richtung auf das Akkumulatorinnere konvergiert die Abdichtung 19 nach unten und zum Pol 1 hin. Auf diese Weise ist ein leichtes Einschieben der Abdichtung 19 von oben möglich, bis die Ringnut 20 mit der Innenkante des Bodens 4 der topfförmigen Ausbildung 10 einrastet.

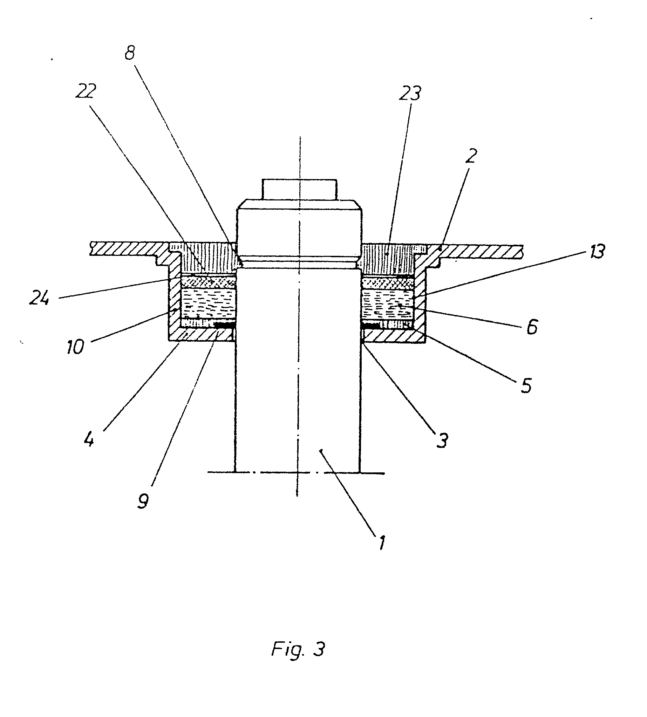

In Figur 3 ist ein anderes Ausführungsbeispiel dargestellt, wobei gleiche Teile mit gleichen Bezugszeichen versehen sind. Hier ist jedoch das Ringteil 11 weggelassen. Der obere Hartverguss 23 nimmt den gesamten Raum zwischen Pol 1 und Gehäuse 2 ein. Zwischen mittlerer Schicht 6 und oberer Schicht 23 ist eine poröse freie Kammer 22 eingefügt, die aus offenporigem Vlies besteht. Zwischen dieser porösen freien Kammer 22 und dem oberen Hartverguss 23 ist eine Trennscheibe 24 eingefügt, welche flüssigkeitsundurchlässig ist. Auf diese Weise wird das Eindringen von Flüssigkeit in die poröse freie Kammer 24 beim Aufbringen der oberen Schicht 23 verhindert.

## Patentansprüche

1. Gas- und flüssigkeitsdichte Polabdichtung für Akkumulatoren, deren Gehäuse aus Kunststoff, vornehmlich aus Polyäthylen oder Polypropylen besteht, insbesondere für Bleiakkumulatoren, mit

a) einer topfförmigen Ausbildung des Kunststoffdeckels (2) im Bereich einer Durchtrittsöffnung (3) für den Pol (1),

b) gegebenenfalls einer unteren Schicht (5) aus Hartverguss am Topfboden (4),

c) einer mittleren Schicht (6, 17) aus thermoplastischem, dauerelastischem, säurebeständigem Kunststoff, oder aus Bitumen, Wachs, Harz, Fett,

d) einer daran angrenzenden oberen Schicht (7, 23) aus Hartverguss oberhalb der mittleren Schicht (6, 17), und

e) einer nach aussen abgedichteten, freien Kammer (14, 22), die mit der mittleren Schicht (6, 17) in Verbindung steht.

2. Polabdichtung nach Anspruch 1, gekennzeichnet durch eine Ringnut (8) des Pols (1) im Bereich der oberen Schicht (7, 23).

3. Polabdichtung nach Anspruch 1 oder 2, gekennzeichnet durch eine Abdichtung (9), aus säurefestem Gummi oder Kunststoff, zwischen Durchtrittsöffnung (3) des Topfbodens (4) und Pol (1).

4. Polabdichtung nach einem der Ansprüche 1 bis 3, dadurch gekennzeichnet, dass die topfförmige Ausbildung (10) des Kunststoffdeckels (2) in Richtung auf das Innere des Akkumulators und einstückig mit dem Kunststoffdeckel erfolgt.

5. Polabdichtung nach einem der Ansprüche 1 bis 4, dadurch gekennzeichnet, dass bei axialen Polverschiebungen die Innenseiten der unteren (5), der mittleren (6, 17) und der oberen (7, 23) Schicht am Pol haften bleiben, die Aussenseiten dieser Schichten jedoch an der Innenseite der topfförmigen Ausbildung (10) des Kunststoffdeckels (2) abdichtend gleiten können.

6. Polabdichtung nach einem der Ansprüche 1–5, gekennzeichnet durch eine Abdichtung (19) aus säurefestem Gummi oder Kunststoff, zwischen der Durchtrittsöffnung (3) des Topfbodens (4) und Pol (1), die eine Rille (20) für die Aufnahme der ringförmigen Innenkante des Topfbodens (4) sowie einen zum Pol (1) hin in Richtung auf das Innere des Akkumulators hin konvergierenden Abschnitt (21) aufweist, derart, dass die Abdichtung (19) vor dem Aufbringen der Poldichtung von oben in die Durchtrittsöffnung (3) zwischen Pol (1) und Innenkante des Topfbodens (4) einschiebbar ist.

7. Polabdichtung nach einem der Ansprüche 1–6, gekennzeichnet durch

a) ein Zylinderteil (11), das zwischen topfförmiger Ausbildung (10) des Akkumulatordeckels (2) und Pol (1) derart angeordnet ist, dass wenigstens zwischen dem unteren Umfangsteil (12) des Zylinderteiles (11) und der Innenseite (13) der topfförmigen Ausbildung (10) ein freier, im wesentlichen ringförmiger, Raum (14) verbleibt,

b) einen zwischen Aussenumfang des oberen Bereiches des Zylinderteiles (11) und Innenseite (13) der topfförmigen Ausbildung (10) angeordneten Dichtungsring (16) aus Gummi oder dauerelastischem Kunststoff, derart, dass zur mittleren Schicht (6, 17) hin ein nach aussen abgedichteter ringförmiger freier Raum (14) entsteht.

8. Polabdichtung nach Anspruch 7, dadurch gekennzeichnet, dass das Zylinderteil (11) einen oberen, radial nach aussen gerichteten Rand (15) aufweist, um ein Austreten des Dichtungsringes (16) nach aussen bei Druckeinwirkung zu verhindern.

9. Polabdichtung nach Anspruch 7 oder 8, dadurch gekennzeichnet, dass der Zylinderteil (11) einen radial nach innen gerichteten Rand (18) zur Verankerung mit dem im Inneren des Zylinderteiles (11) vorgesehenen Hartverguss aufweist.

10. Polabdichtung nach einem der Ansprüche 7–9, dadurch gekennzeichnet, dass das Zylinderteil (11) die äussere Begrenzung der oberen Schicht (7) bildet.

11. Polabdichtung nach einem der Ansprüche 7–10, dadurch gekennzeichnet, dass die Aussenkante des radial nach aussen gerichteten oberen Randes (15) des Zylinderteiles (11) auf einer entsprechenden ringförmigen Einkerbung des Kunststoffdeckels (2) aufliegt.

12. Polabdichtung nach einem der Ansprüche 1–11, dadurch gekennzeichnet, dass die freie Kammer aus porösem, offenporigem und elastischem Material besteht oder mit derartigem Material ausgefüllt ist.

13. Polabdichtung nach Anspruch 12, dadurch gekennzeichnet, dass die poröse freie Kammer (22) zwischen mittlerer Schicht (6) und oberer Schicht (23) aus Hartverguss angeordnet ist und im wesentlichen den gesamten Zwischenraum einnimmt.

14. Polabdichtung nach Anspruch 12 oder 13, dadurch gekennzeichnet, dass die dem Hartverguss (23) zugewandte Oberfläche der porösen freien Kammer mit einem gegenüber dem Hartverguss (23) undurchlässigen Material beschichtet, flüssigkeitsundurchlässig verdichtet ist, oder dass stattdessen eine Trennscheibe (24) vorgesehen ist.

15. Polabdichtung nach einem der Ansprüche 12–14, dadurch gekennzeichnet, dass die mittlere Schicht (6) aus thermoplastischem, dauerelastischem, säurebeständigem Kunststoff, vorzugsweise aus Schmelzkleber, im wesentlichen um die Dicke der porösen freien Kammer (22) reduziert wird, und dass die poröse freie Kammer (22) im wesentlichen den übrigen Raum einnimmt.

16. Polabdichtung nach einem der Ansprüche 12–15, dadurch gekennzeichnet, dass die poröse freie Kammer (22) sowie die Trennscheibe (24) ein Stanzteil sind.

17. Polabdichtung nach einem der Ansprüche 1 bis 16, dadurch gekennzeichnet, dass die mittlere Schicht (6, 17) aus Heissschmelzdichtungsmasse besteht, dass der Dichtungsring (16) zwischen Aussenumfang des oberen Bereiches des Zylinderteiles (11) und Innenseite (13) der topfförmigen Ausbildung (10) ein O-Ring aus Gummi oder dauerelastischem Kunststoff ist, dass die untere Schicht (5) aus säurefestem Zweikomponenten-Harz am Topfboden (4), angeordnet ist, dass die mittlere Schicht (6, 17) aus Schmelzkleber wie zum Beispiel Äthylenacrylpolymere oder anderen Produkten dieser Gattung besteht, und dass die angrenzende obere Schicht (7, 23) aus säurefestem Zweikomponenten-Harz besteht.

**Revendications**

1. Etanchement de pôle étanche aux gaz et aux liquides pour accumulateurs dont le boîtier est en matière plastique, en particulier en polyéthylène ou polypropylène, en particulier pour accumulateurs à plomb, comprenant:

a) un enfoncement en forme de casserole du couvercle en matière plastique (2) dans la zone du passage (3) du pôle (1),

b) le cas échéant une couche inférieure en masse coulée durcie sur le fond de la casserole (4),

c) une couche médiane (6, 17) en matière thermoplastique, durablement élastique et résistante aux acides, ou bien en bitume, en cire, en résine ou en graisse,

d) au-dessus de cette couche médiane (6, 17) et y adjacente une couche supérieure (7, 23) en masse coulée durcie, et

e) une chambre vide étanche vers l'extérieur (14, 22) en contact avec la couche médiane.

2. Etanchement de pôle selon la revendication 1, caractérisé par une rainure circulaire (8) pratiquée dans le pôle (1) à la hauteur de la couche supérieure (7, 23).

3. Etanchement de pôle selon la revendication 1 ou 2, caractérisé par un joint (9) en caoutchouc ou en matière plastique résistant aux acides placé entre le passage pratiqué dans le fond de la casserole (4) et le pôle (1).

4. Etanchement de pôle selon l'une des revendications 1 à 3, caractérisé en ce que l'enfoncement en forme de casserole (10) pratiqué dans le couvercle en matière plastique (2) vers l'intérieur de l'accumulateur ne forme qu'une seule pièce avec ce couvercle.

5. Etanchement de pôle selon l'une des revendications 1 à 4, caractérisé sen ce que, en cas de translation axiale du pôle, les faces intérieures des couches inférieure (5), médiane (6, 17) et supérieure (7, 23) continuent d'adhérer au pôle, leurs faces extérieures pouvant par contre glisser sur la face intérieure de l'enfoncement en forme de casserole (10) pratiqué dans le couvercle en matière plastique (2) tout en assurant l'étanchéité vers ce couvercle (2).

6. Etanchement de pôle selon l'une des revendications 1 à 5, caractérisé par un joint (19) en caoutchouc ou matière plastique résistant aux acides disposé entre le passage (3) pratiqué dans le fond de la casserole (4) et le pôle (1), muni d'une rainure (20) destinée à recevoir l'arête intérieure circulaire du fond de la casserole (4) et présentant une section (21) formée de telle sorte à permettre avant la mise en place de l'étanchement de pôle de glissement du joint (19) par le haut à travers le passage (3) entre le pôle (1) et l'arête intérieure du fond de la casserole (4).

7. Etanchement de pôle selon l'une des revendications 1 à 6, caractérisé par

a) une section de cylindre (11) disposée entre l'enfoncement en forme de casserole (10) du couvercle de l'accumulateur (2) et le pôle (1) de telle manière que soit ménagé un espace libre de forme annulaire (14) entre le diamètre inférieur (12) de la section de cylindre (11) et la face inférieure (13) de l'enfoncement en forme de casserole.

b) une bague d'étanchéité (16) en caoutchouc ou en matière plastique durablement élastique disposée entre le diamètre extérieur de la partie supérieure de la section de cylindre (11) d'une part et la face intérieure (13) de l'enfoncement en forme de casserole (10) d'autre part de telle sorte que soit créé vers la couche médiane (6, 17) une espace libre annulaire étanche vers l'extérieur.

8. Etanchement de pôle selon la revendication 7, caractérisé en ce que la section de cylindre (11) est dotée d'un bord en saillie radiale vers l'extérieur (15) destiné à empêcher une poussée vers l'extérieur due à la pression de la bague d'étanchéité (16).

9. Etanchement de pôle selon la revendication 7 ou 8, caractérisé en ce que la section de cylindre (11) est dotée d'un bord en saillie radiale vers l'intérieure (18) en vue de son ancrage dans la masse coulée durcie prévue à l'intérieur de cette section de cylindre (11).

10. Etanchement de pôle selon l'une des revendications 7 à 9, caractérisé en ce que la section de cylindre (11) constitue la limite vers l'extérieur de la couche supérieure (7).

11. Etanchement de pôle selon l'une des revendications 7 à 10, caractérisé en ce que l'arête extérieure du bord saillant vers l'extérieur (15) de la section de cylindre (11) repose sur une épaule annulaire correspondante pratiquée dans le couvercle en matière plastique (2).

12. Etanchement de pôle selon l'une des revendications 1 à 11, caractérisé en ce que la chambre libre est faite ou est remplie de matériau poreux, à pores ouvertes et élastique.

13. Etanchement de pôle selon la revendication 12, caractérisé en ce que la chambre libre poreuse (22) est disposée entre la couche médiane (6) et la couche supérieure en masse coulée durcie (23) et occupe l'essentiel de l'espace intermédiaire entre ces deux couches.

14. Etanchement de pôle selon la revendication 12 ou 13, caractérisé en ce que la surface de la chambre libre poreuse tournée vers la masse coulée durcie (23) est enduite d'un matériau imperméable vers la masse coulée durcie (23) et est compressée de manière à être étanche aux liquides, ou bien alternativement en ce qu'un verre de séparation (24) est prévu entre la chambre et la masse coulée durcie.

15. Etanchement de pôle selon l'une des revendications 12–14, caractérisé en ce que l'épaisseur de la chambre libre poreuse (22) est retranchée de l'épaisseur de la couche médiane (6) en matière thermoplastique, durablement élastique et résistante aux acides, de préférence en colle de fusion, et que la chambre libre poreuse (22) occupe sensiblement le reste de l'espace ainsi crée.

16. Etanchement de pôle selon l'une des revendications 12 à 15, caractérisé en ce que la chambre libre poreuse (22) et le verre séparateur (24) sont des pièces estampées.

17. Etanchement de pôle selon l'une des revendications 1 à 16, caractérisé en ce que la couche médiane (6, 17) est réalisée en matières de compression fondues, que la bague d'étanchéité (16) disposé entre le diamètre extérieur de la partie supérieure de la section de cylindre (11) et la face intérieure (13) de l'enfoncement en forme de casserole (10) est une bague en 0 en caoutchouc ou en matière plastique durablement élastique, que la couche inférieure (5) en résine à deux composants est disposée sur le fond de la casserole (4), que la couche médiane (6, 17) en colle de fusion comme p.ex. les polymères d'éthylène acryliques ou d'autres produits de cette catégorie, et que la couche supérieure y adjacente (7, 23) est réalisée en résine à deux composants résistante aux acides.

## Claims

1. A gas and liquid-tight pole grommet for storage batteries having a housing made of plastic, predominantly of polyethylene or polypropylene, especially for lead-acid storage batteries, comprising

a) a cup-shaped configuration of the plastic cover (2) in the region of a through-opening (3) for the pole (1),

b) if applicable, a lower layer (5) made of rigid casting material on the cup bottom (4),

c) a middle layer (6, 17) of thermoplastic, permanently elastic, acidproof plastic or of bitumen, wax, resin, grease,

d) an upper layer (7, 23) contiguous therewith and made of rigid casting material on top of said middle layer (6, 17), and

e) a free chamber (14, 22) sealed with respect to the outside and being in communication with said middle layer (6, 17).

2. A pole grommet as claimed in claim 1, characterised by an annular groove (8) of the pole (1) in the region of the upper layer (7, 23).

3. A pole grommet as claimed in claim 1 or claim 2, characterised by sealing means (9) made of acidproof rubber or plastic intermediate the through-opening (3) of the cup bottom (4) and the pole (1).

4. A pole grommet as claimed in any of the claims 1 to 3, characterised in that the cup-shaped configuration (10) of the plastics cover (2) is directed towards the interior of the storage battery and is integral with the plastics cover.

5. A pole grommet as claimed in any of the claims 1 to 4, characterised in that in case of axial displacements of the pole the inner sides of the lower (5), the middle (6, 17) and the upper (7, 23) layers remain adherent to the pole while the outer sides of said layers can slide in sealing engagement along the inside of the cup-shaped configuration (10) of the plastics cover (2).

6. A pole grommet as claimed in any of the claims 1 to 5, characterised by a sealing means (19) of acidproof rubber or plastic provided intermediate the through-opening (3) of the cup bottom (4) and the pole (1), said sealing means including a groove (20) for receiving the annular inner edge of the cup bottom (4) and including a portion (21) converging towards the interior of the storage battery such that the sealing means (19) can be inserted from the top into the through-opening (3) between pole (1) and inner edge of the cup bottom (4) prior to application of the pole grommet.

7. A pole grommet as claimed in any of the claims 1 to 6, characterised by

a) a cylindrical member (11) disposed intermediate the cup-shape configuration (10) of the storage battery cover (2) and the pole (1) such that a free, substantially annular space (14) will remain at least between the lower circumferential portion (12) of the cylindrical member (11) and the inside (13) of the cup-shaped configuration (10),

b) a sealing ring (16) of rubber or permanently elastic plastic material disposed between the outer circumference of the upper portion of the cylindrical member (11) and the inside (13) of the cup-shaped configuration (10) such that an annular free space (14) sealed with respect to the outside is formed towards the middle layer (6, 17).

8. A pole grommet as claimed in claim 7, characterised in that the cylindrical member (11) includes an upper, radially outwardly directed rim (15) to prevent the sealing ring (16) from escaping upon application of pressure.

9. A pole grommet as claimed in claim 7 or claim 8, characterised in that the cylindrical member (11) includes a radially inwardly directed ledge (18) for securing the rigid casting material provided in the interior of the cylindrical member (11).

10. A pole grommet as claimed in any of the claims 7 to 9, characterised in that the cylindrical member (11) constitutes the outer boundary of the upper layer (7).

11. A pole grommet as claimed in any of the claims 7 to 10, characterised in that the outer edge of the radially outwardly directed upper rim (15) of the cylindrical member (11) rests on a corresponding annular recess of the plastics cover (2).

12. A pole grommet as claimed in any of the claims 1 to 11, characterised in that the free chamber is either made of porous, open-pore and elastic material or is filled with such material.

13. A pole grommet as claimed in claim 12, characterised in that the porous free chamber (22) is disposed between the middle layer (6) and the upper layer (23) of rigid casting material and fills substantially the entire interspace.

14. A pole grommet as claimed in claim 12 or claim 13, characterised in that the surface of the porous free chamber facing the rigid casting material (23) is coated with a material impermeable to the rigid casting material (23) and is compacted to be liquid-impermeable, or that a separating disk (24) is provided instead.

15. A pole grommet as claimed in any of the claims 12 to 14, characterised in that the middle layer (6) of thermoplastic, permanently elastic, acidproof plastic, preferably of hot melt adhesive, is reduced substantially by the thickness of the porous free chamber (22), and that the porous free chamber (22) substantially occupies the remaining space.

16. A pole grommet as claimed in any of the claims 12 to 15, characterised in that the porous free chamber (22) and the separating disk (24) are constituted by a punched part.

17. A pole grommet as claimed in any of the claims 1 to 16, characterised in that the middle layer (6, 17) is made of hot melt sealing composition, that the sealing ring (16) between outer circumference of the upper portion of the cylindrical member (11) and inside (13) of the cupshaped configuration (10) is an O-ring of rubber or permanently elastic plastic, that the lower layer (5) of acidproof two-component resin is disposed on the cup bottom (4), that the middle layer (6, 17) consists of hot melt adhesive such as ethylene acrylopolymers or other products of this species, and that the adjacent upper layer (7, 23) consists of acidproof two-component resin.

0 089 619

*12*

Fig. 1

Fig. 2

9

2/2

Fig. 3